# EUROPÄISCHE PATENTSCHRIFT

(11) **EP 3 491 187 B1**
(45) Veröffentlichungstag und Bekanntmachung des Hinweises auf die Patenterteilung: **22.04.2020**
(21) Anmeldenummer: 17743038.6
(22) Anmeldetag: 25.07.2017
(51) Int. Cl.: D21F 3/08, D21H 23/56, D21G 1/02

(54) **WALZENBEZUG SOWIE WALZE UND DEREN VERWENDUNG**
ROLL COVER, ROLL, AND USE OF SAID ROLL
REVÊTEMENT DE CYLINDRE, ET CYLINDRE ET SON UTILISATION

(30) Priorität: 29.07.2016 DE 102016114013
(43) Veröffentlichungstag der Anmeldung: 05.06.2019
(73) Patentinhaber: Voith Patent GmbH, 89522 Heidenheim (DE)
(72) Erfinder: GROHMANN, Franz, 2671 Schmidsdorf (AT); HORAK, Anton, 1140 Wien (AT); EGGERS, Nina, 2620 Neunkirchen (AT); POLLASCHEK, Stefan, 2514 Traiskirchen (AT)
(74) Vertreter: Voith Patent GmbH - Patentabteilung
(86) Internationale Anmeldenummer: PCT/EP2017/068736
(87) Internationale Veröffentlichungsnummer: WO 2018/019816

(56) Entgegenhaltungen:
- DE-A1- 10 151 485
- DE-A1-102009 029 045

## Beschreibung

Die vorliegende Erfindung betrifft einen insbesondere für eine Walze zur Behandlung einer Papier-, Karton-, Tissue- oder einer anderen Faserstoffbahn in einer Maschine zur Herstellung und/oder Veredlung derselben geeigneten Walzenbezug, eine diesen Walzenbezug umfassende Walze und die Verwendung einer solchen Walze.

Bei der Papierherstellung werden bei einer Vielzahl von Verfahrensschritten Walzen und insbesondere Walzen mit einer elastischen Oberfläche eingesetzt. Letztere kommen beispielsweise bei der Blattbildung in der Siebpartie der Papiermaschine, bei dem Entwässern in der Presspartie der Papiermaschine und bei dem Streichen, Trocknen sowie Glätten in der Endpartie der Papiermaschine zum Einsatz. In einem solchen Fall befindet sich die radial äußerste Oberfläche einer solchen Walze in manchen Positionen in der Papiermaschine in nahezu ständigem Kontakt mit der Papierbahn. Derartige Walzen sind daher im Betrieb der Papiermaschine hohen mechanischen Belastungen ausgesetzt. Abgesehen davon müssen diese eine niedrige Rissanfälligkeit, eine hohe Schlagfestigkeit, eine gute Reißfestigkeit, eine hohe Weiterreißfestigkeit, eine hohe Druckfestigkeit und eine ausreichend hohe Härte aufweisen. Gleichzeitig müssen die Walzen ausreichend abrasionsbeständig und verschleißfest sein, um eine möglichst lange Lebensdauer aufzuweisen.

Um den Oberflächen von Walzen die für ihre Verwendung erforderlichen anwendungstechnischen Eigenschaften zu verleihen, werden Walzen an ihrer Oberfläche üblicherweise mit einem auf einem Walzenkern angeordneten Walzenbezug versehen, dessen Material im Hinblick auf die erforderlichen anwendungstechnischen Eigenschaften formuliert wird.

So sind derartige Walzen, besonders beim Einsatz als Press-, Streich- oder Leimwalzen, hohen Temperaturen ausgesetzt. Diese Temperaturen können im Betreib auch 120 °C überschreiten. Derartige Oberflächen von allgemein gesagt Flüssigkeit übertragenden Walzen unterliegen daher einer gewissen thermischen Belastung. Bisher wurden für diesen Zweck aus dem Stand der Technik bekannte, aus vulkanisiertem Kautschuk bestehende Gummiwalzen eingesetzt. Diese liefern zwar einerseits gute mechanische Eigenschaften. Sie neigen jedoch dazu, dass sich die Vulkanisation bei derart hohen Temperaturen im Betrieb der Papiermaschine fortsetzt. Dadurch verhärten und verspröden derartige Walzenbezüge rasch. Auch wurde an solchen Walzen beobachtet, dass infolge der fortgesetzten Vulkanisation im bestimmungsgemäßem Betrieb der Außendurchmesser des Walzenbezugs härter wird.

Ein anderer Lösungsansatz war es bisher anstelle von reinen Gummiwalzenbezügen Polyurethan einzusetzen. Nachteilig hieran ist, dass bei Flüssigkeitskontakt, insbesondere mit Wasser, Polyurethan anfängt zu quellen. Hierdurch wird wiederrum der Außendurchmesser einer solchen Walze im Betrieb weicher. Durch die Größenzunahme ergeben sich analog dieselben Probleme wie bei der fortgesetzten Vulkanisation von Gummiwalzenbezügen. Ferner weist Polyurethan gegenüber Gummi einer weniger hohe Elastizität und weniger gute dynamische Eigenschaften auf.

Das Erhärten bzw. Erweichen des Walzenbezugs führt dazu, dass sich die Nip-Eigenschaften ändern. Dies beeinflusst die Qualität des damit hergestellten bzw. behandelten Papiers.

Aus der DE 101 51 485 A1 ist ein Walzenbezug für eine in einer Papiermaschine zu verwendende Walze bekannt, bei dem der Walzenbezug einen Verschnitt aus Kautschuk und einem Polyurethankautschuk aufweist. Obwohl durch den Verschnitt die mechanischen Anforderungen gegenüber einem reinen Gummi- bzw. einem reinen Polyurethanwalzenbezug verbessert werden, sind die thermischen Eigenschaften eines solchen Walzenbezugs für die eingangs genannten Anwendungsfälle immer noch unzureichend.

Die vorliegende Erfindung betrifft derartige, gattungsgemäße Gegenstände.

Aufgabe der vorliegenden Erfindung ist es daher, einen Walzenbezug und eine Walze bereitzustellen, welche/welcher gegenüber dem Stand der Technik verbessert ist. So soll besonders die thermische Belastbarkeit derartiger Walzen bzw. Walzenbezüge erhöht werden, sodass der Einsatz dieser dauerhaft besonders in Hochtemperaturanwendungen oberhalb von 120 °C möglich wird. Zudem sollen der Serviceaufwand derartiger Walzen im bestimmungsgemäßem Betrieb sowie die dadurch entstehenden Kosten minimiert werden.

Erfindungsgemäß wird diese Aufgabe durch die unabhängigen Ansprüche gelöst. Die abhängigen Ansprüche beschreiben besonders vorteilhafte Ausführungsformen der Erfindung.

Die Erfinder haben erkannt, dass durch die erfindungsgemäße Wahl der Komponenten und deren Zusammensetzung die Maßhaltigkeit und die mechanischen sowie thermischen Eigenschaften derartiger Walzen und Walzenbezüge signifikant verbessert werden können. Durch den erfindungsgemäßen Gewichtsanteil des walzbaren Polyurethankautschuks am herkömmlichen Kautschuk ergibt sich ein besonders thermisch stabiler Walzenbezug. Wird zum Beispiel der Anteil an walzbarem Polyurethankautschuk zwischen 22 und 28 Gew.-% gewählt, so wird ein hinsichtlich der thermischen Belastbarkeit besonders zufriedenstellendes Ergebnis erzielt. Dies war dahingehend überraschend, da ausgehend von den bisherigen Erkenntnissen davon auszugehen war, das eine 1:1 Mischung aus Kautschuk und Polyurethankautschuk am zielführendsten wäre. So gibt auch die DE 101 51 485 A1 an, den Polyurethankautschukanteil gegenüber dem des reinen Kautschuks deutlich zu erhöhen. Die Erfinder stellten jedoch fest, dass sich die erfindungsgemäßen Vorteile auch - oder gerade deshalb einstellen -, wenn der Gewichtsanteil des Polyurethankautschuks deutlich geringer als 50 Gew.-% gewählt wird. Die Gründe, weshalb ein geringerer Anteil an Polyurethankautschuk derart besser ist, sind bis heute nicht abschließend geklärt.

Zudem hat sich gezeigt, dass sich die Lebensdauer einer solchen thermisch stark belasteten Walze erhöht, wenn der Kautschukanteil des Walzenbezugs aus einer Mischung aus NBR und HNBR besteht.

Unter dem Begriff walzbarer Polyurethankautschuk wird gemäß der Erfindung ein bei Raumtemperatur im Festzustand vorliegendes Polymer, insbesondere Elastomer verstanden. Im Gegensatz zu bei Raumtemperatur flüssigen, also gießfähigen Polyurethanen, sind walzbare Polyurethankautschuke (ausschließlich) mit üblichen Kautschukverarbeitungsanlagen wie Innenmischer und auf Walzwerken verarbeitbar. Sie fangen erst infolge der mechanischen Einwirkung in diesen Anlagen an, zu fließen. Polyurethankautschuke zeichnen sich dadurch aus, dass ein stöchiometrischer Mangel an Isocyanatgruppen im Vergleich zu Hydroxylgruppen in der Gesamtreaktion vorliegt, sodass ein leichter, aber positiver Überschuss an Hydroxylgruppen vorliegt. Flüssige Polyurethane haben hingegen einen leichten Überschuss an Isocyanatgruppen. Wie bei anderen synthetischen Kautschuken, sind im Polyurethankautschuk Vernetzungsstellen vorhanden, über die mittels Peroxid oder Schwefel dreidimensionale Netzwerke gebildet werden können. Für eine Schwefelvernetzung werden zusätzlich Doppelbindungen an der Vernetzungsstelle benötigt. Für die Vernetzung sind folgende Substanzen geeignet: Trimetylolpropanmonoallyether, Gylcerinmonallyether 2-buten-1,4 diol oder hydroxyterminiertes Polybutadien. Diese Verbindungen sollten in Bezug auf die OH-Funktionalität mindestens zweiwertig sein und mindestens eine Doppelbindung enthalten. Für die peroxidische Vernetzung ist es nicht zwingend eine ungesättigte Verbindung einzuführen. Die peroxidische Vernetzung kann in diesem über Fall über die Methylengruppen im 4 4'-methylendiphenyldiisocyanat erfolgen.

Polyurethankautschuk ist nicht zerstörungsfrei schmelzbar und daher nicht mit dem bekannten thermoplastischen Polyurethan (TPU) gleichzusetzen, die sich unter moderatem Wärmeeinfluss plastisch verformen lassen. Daher sind Walzenbezüge aus TPU nicht für derartige Hochtemperaturanwendungen, d.h. um oder oberhalb von 120 °C geeignet.

Mit dem Begriff Verschnitt (oder auch Blend) ist ein Stoffgemisch mehrerer Reinstoffe gemeint, die homogen ineinander vermischt sind, also eine Phase bilden. Der Begriff Verschnitt meint somit nicht ein Gemenge, bei dem zwei oder mehr Phasen der genannten Reinstoffe vorliegen. Ein Beispiel für ein (zweiphasiges) Gemenge wäre z.B. ein Polyurethankautschuk, in den gemahlene Partikel von Kautschuk eingelagert sind. Unter Reinstoffen wird im Sinne der vorliegenden Erfindung einerseits der Polyurethankautschuk und andererseits der wenigstens eine weitere Kautschuk verstanden. Beide dieser Stoffe können grundsätzlich auch weitere Zusätze wie Füllstoffe aufweisen und werden dann immer noch als Reinstoff verstanden. Ein solcher Verschnitt wird in der Regel in Innenmischern oder auf Walzwerken hergestellt und verarbeitet.

Wenn gemäß der Erfindung von "wenigstens mittelbar" die Rede ist, dann sind die zwei Alternativen "mittelbar" und "unmittelbar" gemeint. Im ersteren Fall bedeutet mittelbar, dass z.B. eine Walze im mittelbaren Kontakt mit einer Faserstoffbahn ist. Dies also indirekt mit der Faserstoffbahn in Kontakt steht. Eine Walze steht in indirektem Kontakt mit der Faserstoffbahn, wenn sich z.B. zwischen diesen beiden im bestimmungsgemäßem Betrieb eine Flüssigkeit, wie Streich-, Leimfarbe oder Wasser befindet. Unmittelbarer Kontakt hingegen bedeutet, dass Faserstoffbahn und Walze bzw. Walzenbezug ebenfalls im bestimmungsgemäßem Betrieb direkt miteinander - unter Berührung - in Kontakt stehen.

Unter dem Begriff Funktionsschicht wird gemäß der Erfindung die der Faserstoffbahn zugewandte Oberfläche, also die Mantelfläche (radial äußerste Oberfläche) des Walzenbezugs bzw. der Walze verstanden. Es ist diejenige Oberfläche, die im bestimmungsgemäßen Betrieb in wenigstens mittelbaren Kontakt mit der Faserstoffbahn kommt.

Eine Zwischenschicht im Sinne der Erfindung ist Teil des Walzenbezugs. Sie ist hinsichtlich der Funktionsschicht eine hierzu separate Schicht, die zur Lastaufnahme der im bestimmungsgemäßen Betrieb auf die Funktionsschicht einwirkenden Kräfte dient. Die Zwischenschicht ist in der Regel in Bezug auf die Längsachse des Walzenbezugs bzw. der Walze gesehen radial innerhalb der radial äußersten Schicht, hier Funktionsschicht genannt, angeordnet und in der Regel mit dieser stoffschlüssig gefügt.

Unter bestimmungsgemäßem Betrieb ist jener Zustand zu verstehen, in dem der fertig hergestellte (vulkanisierte) Walzenbezug bzw. die fertige Walze in der eingangs genannten Papier-, Karton- oder Tissuemaschine zu dem Zwecke der Behandlung derselben in einer Maschine zur Herstellung und/oder Veredlung der Faserstoffbahn eingebaut ist und diese Maschine im Betrieb ist.

Derartige für solche Maschinen geeignete Walzen messen mehrere Meter sowohl in ihrer Länge (entlang deren Längsachse) als auch im Durchmesser.

Versuche zeigten, dass der Walzenbezug thermisch besonders gut belastbar ist, wenn der Kautschuk aus der Gruppe ausgewählt ist, welche aus vernetzten Naturkautschuken, vernetzten Nitrilkautschuken (NBR), vernetzten hydrierten Nitrilkautschuken (HNBR), vernetzten carboxylierten Nitrilkautschuken, Styrol-Butadien-Kautschuken (SBR), Ethylen-Propylen-Dien-Kautschuken (EPDM) und beliebigen Mischungen aus zwei oder mehr der vorgenannten vernetzten Kautschuke besteht.

Auch eine Mischung von Kautschuken aus einem vernetzten Nitrilkautschuk (NBR) und einem vernetzten hydrierten Nitrilkautschuk (HNBR), bei der der Anteil des vernetzten hydrierten Nitrilkautschuks am vernetzten Nitrilkautschuk (NBR) 50 Gew.-% nicht übersteigt zeigt eine extrem gute thermische Belastbarkeit des Walzenbezugs.

Werden in die wenigstens eine Schicht, wie Funktionsschicht, Füllstoffe eingebettet, sodass die Funktionsschicht als Matrix für diese dient, so haben sich anorganische Füllstoffe als am besten erwiesen. Denn Füllstoffe, die aus Aluminiumoxid, Titandioxid, Zirkoniumdioxid, Yttriumoxid, Siliciumdioxid, Chromoxid, Chromcarbid, Titancarbid, Borcarbid, Wolframcarbid, Aluminiumcarbid, Bornitrid, Aluminiumnitrid, Chromnitrid, Niobnitrid, Chromcarbonitrid, Titancarbonitrid, Borcarbonitrid, Wolframcarbonitrid, Diamant, Aluminiumsilikaten, Aluminiumnatriumsilikaten, Calciumsilikaten, Calciumnatriumsilikaten oder Kieselsäuren (gefällt, pyrogen, oberflächenbehandelt z.B. mit Silanen) und beliebigen Mischungen aus zwei oder mehr der vorgenannten Verbindungen bestehen, sind auch für den Hochtemperatureinsatz besonders geeignet.

Wenn der walzbare Polyurethankautschuk durch Reaktion aus einem Polyol mit einem Diisocyanat und einem Vernetzer hergestellt ist, dann sind als Polyol ein Polyether- oder Polyester-Polyol oder eine Mischung der vorgenannten Polyole sowie als Diisocyanat Methylendiphenylisocyanate (MDI), Naphthylen-1,5-diisocyanat (NDI), Toluol-2,4-diisocyanat (TDI), 1,4-Phenylendiisocyanate (PPDI), Polycarbonate, Polycarbonatdiole (PCDL) oder Mischungen der vorgenannten Diisocyanate besonders geeignet, um die mechanischen, dynamischen und thermischen Belastungen des Walzenbezugs optimal aufzunehmen. Grundsätzlich können alle gängigen OH-funktionellen Polyole verwendet werden. Wie z.B.: Polyesterpolyole, Polyetherpolyle, Polycaprolactone.

Gemäß einer dazu alternativen und besonders bevorzugten Ausführungsform der vorliegenden Erfindung besteht der Walzenbezug aus der wenigstens einen Schicht, wobei es besonders bevorzugt ist, dass dieser eine Dicke zwischen 5 und 25 mm aufweist. Eine solche Ausführungsform hat sich als besonders optimal für die eingangs genannten Anwendungszwecke erwiesen.

Als Vulkanisationsmittel (Vernetzer) für den Verschnitt aus walzbarem Polyurethankautschuk und dem reinen Kautschuk können alle dem Fachmann zu diesem Zweck bekannten Verbindungen eingesetzt werden, und zwar, Vulkanisationsmittel auf Basis von (Meth-)Acrylaten, Vulkanisationsmittel auf Basis von Polysulfiden, Vulkanisationsmittel auf Basis von Schwefel, wie Thioharnstoffverbindungen, Vulkanisationsmittel auf Basis von Triazinderivaten und Vulkanisationsmittel auf Basis von Peroxidverbindungen, wobei Vulkanisationsmittel auf Basis von Peroxidverbindungen zu bevorzugen sind. Denn auch diese Mittel sind besonders gut für Hochtemperaturanwendungen geeignet.

Die Vulkanisation des Walzenbezugs kann unter den üblichen, dem Fachmann bekannten Druck- und Temperaturbedingungen durchgeführt werden, und zwar beispielsweise in einem Autoklaven bei einer Temperatur zwischen 40 und 170°C und bevorzugt zwischen 90 und 160°C sowie bei einem Druck zwischen 2 und 10 bar und bevorzugt zwischen 3 und 5 bar.

Ein bevorzugter Walzenbezug, der die erfindungsgemäßen Vorteile besonders gut erfüllt, ist aus einem Polymer hergestellt ist, das ein Verschnitt aus wenigstens einem Kautschuk und einem walzbarem Polyurethankautschuk ist, wobei das Polymer 75 Gew.-% des wenigstens einen Kautschuks, und 25 Gew.-% an walzbarem Polyurethankautschuk aufweist. Dabei können die 75 Gew.-% des wenigstens einen Kautschuks zu 15% aus HNBR und zu 60% aus NBR bestehen. Dem Polymer können ferner die üblichen Chemikalien zugesetzt sein.

Ein weiterer Gegenstand der vorliegenden Erfindung betrifft eine Walze mit einem Walzenkern und einem auf dem Walzenkern ausgebildeten elastischen Walzenbezug, welcher wie zuvor beschrieben zusammengesetzt ist.

Ferner betrifft die vorliegende Erfindung die Verwendung der zuvor beschriebenen Walze in einer Papier-, Karton- oder Tissuemaschine und bevorzugt zum Oberflächenveredeln, insbesondere zum Leimen, Streichen und/oder Pigmentieren, oder zum Entwässern einer solchen entsprechenden Faserstoffbahn.

Grundsätzlich eignet sich der erfindungsgemäße Walzenbezug bzw. die Walze für jegliche Anwendungen in der eingangs genannten Maschine. Besonders gute Ergebnisse lassen sich bei Hochtemperaturanwendungen erzielen, z.B. wenn die Walze eine Presswalze eines beheizbaren oder beheizten Trockenzylinders (Yankee-Zylinder) ist. Die Erfindung betrifft auch eine Kombination eines solchen Trockenzylinders mit einer als Presswalze ausgeführten erfindungsgemäßen Walze, wobei Trockenzylinder und Presswalze im bestimmungsgemäßem Betrieb unmittelbar miteinander in Kontakt stehen und einen Pressnip miteinander begrenzen oder ausbilden, durch den im bestimmungsgemäßem Betrieb die Faserstoffbahn zu deren thermischer Behandlung durchführbar ist.

Schließlich betrifft die Erfindung eine Verwendung eines Polymers, das ein Verschnitt aus wenigstens einem Kautschuk und einem walzbarem Polyurethankautschuk ist, wobei das Polymer 65 Gew.-% bis 85 Gew.-% des wenigstens einen Kautschuks und 15 Gew.-% bis 35 Gew.-% an walzbarem Polyurethankautschuk aufweist zur Herstellung eines Walzenbezugs bzw. einer Walze.

Die Erfindung soll nun anhand der einzigen Figur exemplarisch erläutert werden.

Es zeigt:

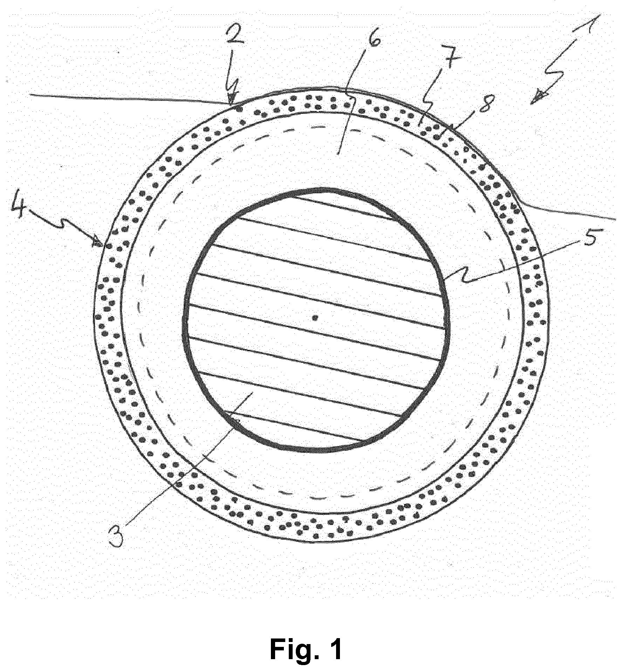

- Figur 1: eine nicht maßstabsgetreue Darstellung einer Walze im Querschnitt durch deren Längsachse.

Die Figur 1 zeigt eine Ausführungsform einer erfindungsgemäßen Walze 1 im Querschnitt durch deren Längsachse, die vorliegend senkrecht zur Darstellungsebene verläuft. Die Walze 1 hat einen zylindrischen Walzenkern 3 sowie einen die Mantelfläche des Walzenkerns 3 überdeckenden Walzenbezug 4. Der Walzenbezug 4 ist aus mehreren Schichten hergestellt und weist vorliegend eine Zwischenschicht 6 auf.

Im vorliegenden Fall liegt direkt auf der Zwischenschicht 6 eine Funktionsschicht 7 auf, welche bei bestimmungsgemäßem Betrieb der Walze 1 wenigstens mittelbar mit einer Faserstoffbahn 2 in Kontakt bringbar ist. Letztere umschlingt, wie in der Figur 1 dargestellt im bestimmungsgemäßen Betrieb der Maschine, in der die Walze 1 eingebaut ist, wenigstens teilweise die radial äußerste Oberfläche des Walzenbezugs 4 in Umfangsrichtung.

Die Funktionsschicht 7 ist gemäß der Erfindung hergestellt. Sie ist aus einem Polymer hergestellt, das ein Verschnitt aus einem walzbaren, elastomeren Polyurethankautschuk sowie wenigstens einem weiteren Kautschuk wie bspw. NBR, HNBR oder einer Mischung aus diesen beiden ist.

Im vorliegenden Fall sind in der (radial äußersten) Funktionsschicht 7 Füllstoffe 8 eingebettet. Die Funktionsschicht 7 dient daher als Matrix für die in Festform vorliegenden Füllstoffe 8. Diese können grundsätzlich in Form von Partikeln oder Fasern vorliegen. Die Füllstoffe 8 sind jedoch nicht zwingend notwendig und werden je nach Anwendungsfall der Funktionsschicht 7 zugegeben. Sie können, wie eingangs beschrieben, ausgewählt sein. Bei Vorsehen einer Mehrzahl von Schichten, können derartige Füllstoffe 8 in jeder einzelnen Schicht vorgesehen sein. Die Schichten können erfindungsgemäß ausgeführt sein. Die radial äußerste Schicht wird dann Funktionsschicht genannt.

Zur Verbesserung der Haftung der Zwischenschicht 6 oder einem sonstigen Unterbau, der direkt am Walzenkern 3 angeordnet ist, kann eine Haftschicht 5 vorgesehen sein. Diese ist bezogen auf die Längsachse der Walze in Radialrichtung zwischen Walzenkern 3 und Zwischenschicht 6 angeordnet. Je nach Anwendungsfall kann eventuell auf eine solche Haftschicht 5 verzichtet werden, sodass die Zwischenschicht 6 bzw. die Funktionsschicht 7 direkt auf dem Walzenkern 3 zum Aufliegen käme.

Obwohl dies nicht gezeigt ist, könnte auf eine solche Zwischenschicht 6 grundsätzlich verzichtet werden. In einem solchen Fall würde Die Funktionsschicht 7 direkt oder indirekt über eine Haftschicht 5 auf dem Walzenkern 3 angeordnet sein.

Eine mit einem solchen Walzenbezug versehene Walze weist zum einen besonders günstige mechanische Eigenschaften, wie eine sehr niedrige Rissanfälligkeit, eine exzellente Schlagfestigkeit sowie eine hervorragende Abrasionsbeständigkeit auf. Zum anderen ist durch die erfindungsgemäße Werkstoffwahl auch die thermische Belastbarkeit des Walzenbezugs außerordentlich.

## Patentansprüche

1. Walzenbezug für eine Walze zur Behandlung einer Papier-, Karton-, Tissue- oder einer anderen Faserstoffbahn in einer Maschine zur Herstellung und/oder Veredlung derselben, umfassend eine radial äußerste Schicht, nachfolgend Funktionsschicht genannt, welche aus einem Polymer hergestellt ist, das ein Verschnitt aus wenigstens einem Kautschuk und einem walzbaren Polyurethankautschuk ist, wobei das Polymer 65 Gew.-% bis 85 Gew.-% des wenigstens einen Kautschuks und 15 Gew.-% bis 35 Gew.-% an walzbarem Polyurethankautschuk aufweist, wobei der Kautschuk aus der Gruppe ausgewählt ist, welche aus vernetzten Naturkautschuken, vernetzten Nitrilkautschuken (NBR), vernetzten hydrierten Nitrilkautschuken (HNBR), vernetzten carboxylierten Nitrilkautschuken, Styrol-Butadien-Kautschuken (SBR), Ethylen-Propylen-Dien-Kautschuken (EPDM) und beliebigen Mischungen aus zwei oder mehr der vorgenannten vernetzten Kautschuke besteht.

2. Walzenbezug nach Anspruch 1, **dadurch gekennzeichnet, dass** der Anteil des walzbaren Polyurethankautschuks am Polymer 20 Gew.-% bis 30 Gew.-% und insbesondere zwischen 22 Gew.-% und 28 Gew.-% beträgt.

3. Walzenbezug nach zumindest einem der vorstehenden Ansprüche, **dadurch gekennzeichnet, dass** der wenigstens eine Kautschuk ein vernetzter Nitrilkautschuk (NBR), ein vernetzten hydrierten Nitrilkautschuken (HNBR) oder eine Mischung der vorgenannten, vernetzten Kautschuke ist, wobei bei Vorsehen einer Mischung der Anteil des vernetzten hydrierten Nitrilkautschuks (HNBR) am vernetzten Nitrilkautschuk (NBR) 50 Gew.-% nicht übersteigt.

4. Walzenbezug nach zumindest einem der vorstehenden Ansprüche, **dadurch gekennzeichnet, dass** die wenigstens eine Funktionsschicht als Matrix für wenigstens einen darin eingebetteten, anorganischen Füllstoff dient, wobei der wenigstens eine anorganische Füllstoff aus der Gruppe ausgewählt ist, welche aus Aluminiumoxid, Titandioxid, Zirkoniumdioxid, Yttriumoxid, Siliciumdioxid, Chromoxid, Chromcarbid, Titancarbid, Borcarbid, Wolframcarbid, Aluminiumcarbid, Bornitrid, Aluminiumnitrid, Chromnitrid, Niobnitrid, Chromcarbonitrid, Titancarbonitrid, Borcarbonitrid, Wolframcarbonitrid, Diamant, Aluminiumsilikaten, Aluminiumnatriumsilikaten, Calciumsilikaten, Calciumnatriumsilikaten und beliebigen Mischungen aus zwei oder mehr der vorgenannten Verbindungen besteht.

5. Walzenbezug nach zumindest einem der vorstehenden Ansprüche, **dadurch gekennzeichnet, dass** der walzbare Polyurethankautschuk durch Reaktion aus einem Polyol mit einem Diisocyanat und einem Vernetzer hergestellt ist.

6. Walzenbezug nach Anspruch 5, **dadurch gekennzeichnet, dass** das Polyol ein Polyether- oder Polyester-Polyol oder eine Mischung der vorgenannten Polyole ist.

7. Walzenbezug nach Anspruch 5 oder 6, **dadurch gekennzeichnet, dass** das Diisocyanat umfasst: Methylendiphenylisocyanate (MDI), Naphthylen-1,5-diisocyanat (NDI), Toluol-2,4-diisocyanat (TDI), 1,4-Phenylene diisocyanate (PPDI), Polycarbonate oder Polycarbonatdiole (PCDL) oder Mischungen der vorgenannten Diisocyanate.

8. Walze zur Behandlung einer Papier-, Karton-, Tissue- oder einer anderen Faserstoffbahn in einer Maschine zur Herstellung und/oder Veredlung derselben, mit einem Walzenkern und einem auf dem Walzenkern ausgebildeten Walzenbezug nach zumindest einem der vorstehenden Ansprüche.

9. Walze nach Anspruch 8, **dadurch gekennzeichnet, dass** mehrere, in Radialrichtung des Walzenbezugs gesehen, übereinander angeordneten Schichten vorgesehen sind.

10. Walze nach Anspruch 8 oder 9, **dadurch gekennzeichnet, dass** in Radialrichtung des Walzenbezugs gesehen, radial innerhalb der wenigstens einen Funktionsschicht eine Zwischenschicht vorgesehen ist, wobei bevorzugt die Zwischenschicht härter ausgeführt ist als die wenigstens eine Funktionsschicht.

11. Verwendung einer Walze nach einem der Ansprüche 8 bis 10 in einer Papier-, Karton- oder Tissuemaschine, wobei die Walze bevorzugt zum Oberflächenveredeln, Entwässern, Leimen, Streichen oder Pigmentieren der Papier-, Karton- oder Tissuebahn eingesetzt wird.

12. Kombination einer Walze gemäß einem der Ansprüche 8 bis 10 mit einem beheizbaren oder beheizten Trockenzylinder, wobei die Walze und Trockenzylinder wenigstens mittelbar miteinander in Kontakt stehen und einen Pressnip miteinander begrenzen.

## Claims

1. Roll covering for a roll for the treatment of a fibrous web made of paper, of paperboard, of tissue or of another material in a machine for the production and/or finishing of the same, comprising a radially outermost layer, hereinafter termed functional layer, which has been produced from a polymer that is a blend made of a roll-millable polyurethane rubber and of at least one other rubber, where the polymer comprises 15% by weight to 35% by weight of roll-millable polyurethane rubber and 65% to 85% by weight of the at least one other rubber, where the other rubber is selected from the group consisting of crosslinked natural rubbers, crosslinked nitrile rubbers (NBR), crosslinked hydrogenated nitrile rubbers (HNBR), crosslinked carboxylated nitrile rubbers, styrene-butadiene rubbers (SBR), ethylenepropylene-diene rubbers (EPDM) and any desired mixtures of two or more of the abovementioned crosslinked other rubbers.

2. Roll covering according to Claim 1, **characterized in that** the proportion of the roll-millable polyurethane rubber, based on the polymer, is 20% by weight to 30% by weight and in particular between 22% by weight and 28% by weight.

3. Roll covering according to at least one of the preceding claims, **characterized in that** the at least one other rubber is a crosslinked nitrile rubber (NBR), a crosslinked hydrogenated nitrile rubber (HNBR) or a mixture of the abovementioned crosslinked other rubbers where, if a mixture is provided, the proportion of the crosslinked hydrogenated nitrile rubber (HNBR), based on the crosslinked nitrile rubber (NBR) does not exceed 50% by weight.

4. Roll covering according to at least one of the preceding claims, **characterized in that** the at least one functional layer serves as matrix for at least one inorganic filler embedded therein, where the at least one inorganic filler is selected from the group consisting of aluminium oxide, titanium dioxide, zirconium dioxide, yttrium oxide, silicon dioxide, chromium oxide, chromium carbide, titanium carbide, boron carbide, tungsten carbide, aluminium carbide, boron nitride, aluminium nitride, chromium nitride, niobium nitride, chromium carbonitride, titanium carbonitride, boron carbonitride, tungsten carbonitride, diamond, aluminium silicates, aluminium sodium silicates, calcium silicates, calcium sodium silicates and any desired mixtures of two or more of the abovementioned compounds.

5. Roll covering according to at least one of the preceding claims, **characterized in that** the roll-millable polyurethane rubber has been produced via reaction from a polyol with a diisocyanate and a crosslinking agent.

6. Roll covering according to Claim 5, **characterized in that** the polyol is a polyether polyol or polyester polyol or a mixture of the abovementioned polyols.

7. Roll covering according to Claim 5 or 6, **characterized in that** the diisocyanate comprises: methylenediphenyl isocyanates (MDI), naphthylene 1,5-diisocyanate (NDI), toluene 2,4-diisocyanate (TDI), phenylene 1,4-diisocyanates (PPDI), polycarbonates or polycarbonatediols (PCDL) or a mixture of the above-mentioned diisocyanates.

8. Roll for the treatment of a fibrous web made of paper, of paperboard, of tissue or of another material in a machine for the production and/or finishing of the same, with a roll core and, configured on the roll core, a roll covering according to at least one of the preceding claims.

9. Roll according to Claim 8, **characterized in that** a plurality of layers have been provided, arranged on top of one another in radial direction of the roll covering.

10. Roll according to Claim 8 or 9, **characterized in that** an intermediate layer has been provided which, in radial direction of the roll covering, is radially within the at least one function layer, where the intermediate layer is preferably harder than the at least one functional layer.

11. Use of a roll according to any of Claims 8 to 10 in a machine for producing paper, paperboard or tissue, where the roll is preferably used for the surface-finishing, drainage, sizing, coating or pigmentation of the paper web, paperboard web or tissue web.

12. Combination of a roll according to any of Claims 8 to 10 with a heatable or heated drying cylinder where, at least indirectly, the roll and drying cylinder are in contact with one another and together they delimit a press nip.

## Revendications

1. Revêtement de cylindre pour un cylindre pour le traitement d'une bande en papier, carton, papier mince ou une autre matière fibreuse dans une machine pour la fabrication et/ou l'affinage de celle-ci, comprenant une couche radialement extérieure, ci-après nommée couche fonctionnelle, qui est fabriquée en un polymère, qui est un mélange d'au moins un caoutchouc et d'un caoutchouc de polyuréthane cylindrable, le polymère comprenant 65 % en poids à 85 % en poids dudit au moins un caoutchouc et 15 % en poids à 35 % en poids de caoutchouc de polyuréthane cylindrable, le caoutchouc étant choisi dans le groupe qui est constitué par les caoutchoucs naturels réticulés, les caoutchoucs de nitrile réticulés (NBR), les caoutchoucs de nitrile hydrogénés réticulés (HNBR), les caoutchoucs de nitrile carboxylés réticulés, les caoutchoucs de styrène-butadiène (SBR), les caoutchoucs d'éthylène-propylène-diène (EPDM) et les mélanges quelconques de deux ou davantage des caoutchoucs réticulés susmentionnés.

2. Revêtement de cylindre selon la revendication 1, **caractérisé en ce que** la proportion du caoutchouc de polyuréthane cylindrable par rapport au polymère est de 20 % en poids à 30 % en poids, et notamment comprise entre 22 % en poids et 28 % en poids.

3. Revêtement de cylindre selon au moins l'une quelconque des revendications précédentes, **caractérisé en ce que** ledit au moins un caoutchouc est un caoutchouc de nitrile réticulé (NBR), un caoutchouc de nitrile hydrogéné réticulé (HNBR) ou un mélange des caoutchoucs réticulés susmentionnés, en cas de prévision d'un mélange, la proportion du caoutchouc de nitrile hydrogéné réticulé (HNBR) par rapport au caoutchouc de nitrile réticulé (NBR) ne dépassant pas 50 % en poids.

4. Revêtement de cylindre selon au moins l'une quelconque des revendications précédentes, **caractérisé en ce que** ladite au moins une couche fonctionnelle sert de matrice pour au moins une charge inorganique incorporée dans celle-ci, ladite au moins une charge inorganique étant choisie dans le groupe qui est constitué par l'oxyde d'aluminium, le dioxyde de titane, le dioxyde de zirconium, l'oxyde d'yttrium, le dioxyde de silicium, l'oxyde de chrome, le carbure de chrome, le carbure de titane, le carbure de bore, le carbure de tungstène, le carbure d'aluminium, le nitrure de bore, le nitrure d'aluminium, le nitrure de chrome, le nitrure de niobium, le carbonitrure de chrome, le carbonitrure de titane, le carbonitrure de bore, le carbonitrure de tungstène, le diamant, les silicates d'aluminium, les silicates d'aluminium-sodium, les silicates de calcium, les silicates de calcium-sodium et les mélanges quelconques de deux ou davantage des composés susmentionnés.

5. Revêtement de cylindre selon au moins l'une quelconque des revendications précédentes, **caractérisé en ce que** le caoutchouc de polyuréthane cylindrable est fabriqué par réaction d'un polyol avec un diisocyanate et un agent de réticulation.

6. Revêtement de cylindre selon la revendication 5, **caractérisé en ce que** le polyol est un polyéther- ou polyester-polyol ou un mélange des polyols susmentionnés.

7. Revêtement de cylindre selon la revendication 5 ou 6, **caractérisé en ce que** le diisocyanate comprend : les isocyanates de diphényl-méthylène (MDI), le 1,5-diisocyanate de naphtylène (NDI), le 2,4-diisocyanate de toluène (TDI), les diisocyanates de 1,4-phénylène (PPDI), les polycarbonates ou les polycarbonate-diols (PCDL) ou les mélanges des diisocyanates susmentionnés.

8. Cylindre pour le traitement d'une bande en papier, carton, papier mince ou une autre matière fibreuse dans une machine pour la fabrication et/ou l'affinage de celle-ci, comprenant un noyau de cylindre et un revêtement de cylindre selon au moins l'une quelconque des revendications précédentes formé sur le noyau de cylindre.

9. Cylindre selon la revendication 8, **caractérisé en ce que** plusieurs couches agencées les unes au-dessus des autres, observées dans la direction radiale du revêtement de cylindre, sont prévues.

10. Cylindre selon la revendication 8 ou 9, **caractérisé en ce qu'**observé dans la direction radiale du revêtement de cylindre, une couche intermédiaire est prévue radialement à l'intérieur de ladite au moins une couche fonctionnelle, la couche intermédiaire étant de préférence configurée plus dure que ladite au moins une couche fonctionnelle.

11. Utilisation d'un cylindre selon l'une quelconque des revendications 8 à 10 dans une machine pour le papier, le carton ou le papier mince, le cylindre étant de préférence utilisé pour l'affinage de surfaces, la déshydratation, le collage, l'enduction ou la pigmentation de la bande en papier, carton ou papier mince.

12. Combinaison d'un cylindre selon l'une quelconque des revendications 8 à 10 avec un rouleau de séchage chauffant ou chauffé, le cylindre et le rouleau de séchage étant au moins en contact indirect l'un avec l'autre et délimitant l'un avec l'autre une ligne de pressage.
